# EUROPÄISCHE PATENTANMELDUNG

(11) **EP 1 510 335 A1**
(43) Veröffentlichungstag der Anmeldung: **02.03.2005**
(21) Anmeldenummer: 04018868.2
(22) Anmeldetag: 09.08.2004
(51) Int. Cl.: B32B 25/08

(54) **Kunststoff-Verbundbauteil**

(30) Priorität: 22.08.2003 DE 10338589
(71) Anmelder: Bayer MaterialScience AG, 51368 Leverkusen (DE)
(72) Erfinder: Wagenblast, Joachim, Dr., Sar (HK)

(57) **Zusammenfassung**

Die Erfindung beschreibt ein Kunststoff-Verbundbauteil, welches folgenden Schichtenaufbau aufweist: a) wenigstens eine Schicht aus wenigstens einem thermoplastischen Kunststoff, b) wenigstens eine Schicht aus wenigstens einem elastomeren Kunststoff und c) wenigstens eine Schicht aus wenigstens einem thermoplastischen Kunststoff, wobei die Schicht b) zwischen der Schicht a) und der Schicht c) angeordnet ist.

## Beschreibung

Die Erfindung betrifft ein Kunststoff-Verbundbauteil aus einem Thermoplast/Elastomer-Verbund, welches aufgrund einer hohen Schlagzähigkeit bei tiefen Temperaturen, einer geringen Wärmeausdehnung sowie glatter Oberflächen (Class A) beispielsweise als Beplankungsteil einer Kraftfahrzeug-Karosserie eingesetzt werden kann.

Im Fahrzeugbau werden bei konventioneller Bauweise Beplankungsteile wie z.B. Kotflügel, Türenverkleidungen, Seitenverkleidungen oder Motorhauben aus Stahl eingesetzt. Aufgrund seiner Duktilität weist Stahl auch bei tiefen Temperaturen eine sehr gute Schlagzähigkeit und eine geringe Wärmeausdehnung auf. Darüber hinaus kann Stahlblech mit guten Oberflächenqualitäten hergestellt werden. Dadurch können die hohen Anforderungen an Kraftfahrzeugbeplankungen, wie splitterfreie Verformung im Crashfall, kleine Maßänderungen bei Temperaturänderungen zur Gewährleistung geringer Spaltbreiten zwischen den einzelnen Beplankungsteilen sowie optische Anforderungen in Bezug auf Farbe und Glanz, erfüllt werden. Zur Reduzierung des Fahrzeuggewichts werden auch Beplankungsteile aus Kunststoff eingesetzt. Kunststoffe weisen im Vergleich zu Stahl eine deutlich geringere Dichte auf. Beplankungsteile aus Kunststoffen ermöglichen daher, Fahrzeuge leichter zu machen und den Kraftstoffverbrauch zu verringern.

Diese in der Praxis eingesetzten Kunststoffbeplankungen weisen jedoch den Nachteil auf, dass sie eine wesentlich höhere Wärmeausdehnung besitzen. Die Wärmeausdehnung von gebräuchlichen unverstärkten oder ungefüllten Kunststoffen für die Karosserie liegt zwischen 70·10⁻⁶ und 110·10⁻⁶ K⁻¹. Im Vergleich hierzu liegt die Wärmeausdehnung von Stahl bei 10·10⁻⁶ K⁻¹. Die Schlagzähigkeit von Kunststoffen ist zudem sehr stark temperaturabhängig. Bei schlagartiger mechanischer Beanspruchung liegt der Übergang von zähem zu sprödem Bruchverhalten bei tieftemperatur-schlagzähen Typen bei -40 bis -30°C. Demgegenüber weist Stahl im Kfz-Anwendungsbereich ein nahezu temperaturunabhängiges Bruchverhalten auf.

Versucht man die Wärmeausdehung bei Kunststoffen mit Hilfe von Füll- und/oder Verstärkungsstoffen zu verringern, werden Oberflächengüte und Schlagzähigkeit negativ beeinflusst. Um Oberflächengüte und Schlagzähigkeit nicht allzu sehr zu beeinträchtigen, muss der Gehalt an Füll- und/oder Verstärkungsstoffen auf 10 bis 20 Gew.-% begrenzt werden. Dabei lassen sich Wärmeausdehnungen zwischen 45·10⁻⁶ und 65·10⁻⁶ K⁻¹ erzielen. Außerdem liegt der Übergang von zähem zu sprödem Bruchverhalten bei -20 bis 0°C.

In EP-A 0 422 358 wird ein Kunststoff-Verbundkörper aus Polyamid und Kautschuk beschrieben. Mit diesem Verbundformkörper sollen die Eigenschaften Festigkeit und Steifigkeit mit Elastizität und Rutschfestigkeit kombiniert werden. Eine Reduzierung der Wärmeausdehnung wird nicht beschrieben. Nachteilig bei diesem Verbundkörper ist, dass das Polyamid mit einem Fasergewebe verstärkt ist, so dass sich mit diesem Kunststoff-Verbundkörper keine Class A-Oberflächen realisieren lassen.

Der Erfindung liegt daher die Aufgabe zugrunde, ein Kunststoff-Verbundbauteil zu schaffen, welches eine geringe Wärmeausdehnung, ein zäh-elastisches Verformungsverhalten bei tiefen Temperaturen und schlagartiger Beanspruchung sowie eine Class A-Oberfläche aufweist.

Gegenstand der Erfindung ist ein Kunststoff-Verbundbauteil, welches folgenden Schichtenaufbau aufweist:
a) wenigstens eine Schicht aus wenigstens einem thermoplastischen Kunststoff
b) wenigstens eine Schicht aus wenigstens einem elastomeren Kunststoff
c) wenigstens eine Schicht aus wenigstens einem thermoplastischen Kunststoff,
wobei die Schicht b) zwischen der Schicht a) und der Schicht c) angeordnet ist.

Das erfindungsgemäße Kunststoff-Verbundbauteil besitzt demnach zwei äußere Schichten a) und c) aus thermoplastischem Kunststoff und eine dazwischen liegende Schicht b) aus elastomerem Kunststoff. Die Schichten a) und c) können jeweils auch aus einer Mischung verschiedener thermoplastischer Kunststoffe bzw. die Schicht b) aus einer Mischung verschiedener elastomerer Kunststoffe aufgebaut sein. Ferner können die Schichten a) und c) jeweils in sich aus mehreren Schichten aus gleichen oder verschiedenen thermoplastischen Kunststoffen bzw. die Schicht b) in sich aus mehreren Schichten aus gleichen oder verschiedenen elastomeren Kunststoffen bestehen.

Der thermoplastische Kunststoff der Schichten a) und c) kann faserverstärkt und/oder mineralgefüllt und/oder elastomermodifiziert sein. Beispiele für mögliche thermoplastische Kunststoffe sind Polyethylenterephthalat, Polybutylenterephthalat, Polyethylenterephthalat/Polycarbonat, Polyethylenterephthalat/Acrylnitril-Styrol-Acrylat, Polybutylenterephthalat/Polycarbonat, Polybutylenterephthalat/ Acrylnitril-Styrol-Acrylat, Polycarbonat/Acrylnitril-Styrol-Acrylat, Polycarbonat/Acrylnitril-Butadien-Styrol, Acrylnitril-Butadien-Styrol, Polyamid und Polypropylen. Beispiele für Füllund Verstärkungsstoffe sind Glasfasern, Glasgewebe, Glasmatten, Mineralstoffe, Textilfasern, gereckte Kunststofffasern, Metallfasern.

Die thermoplastische Kunststoff der Schichten a) und c) kann bis zu 40 Gew.% eines elastomeren Kunststoffs enthalten. Als Elastomer kann hierfür beispielsweise thermoplastisches Polyurethan eingesetzt werden. Daneben sind auch chemisch vemetzte Elastomere einsetzbar, z.B. Styrolbutadien-Kautschuk, Butyl-Kautschuk, Acrylnitril-Kautschuk, Ethylenvinylacetat-Kautschuk, Ethylenpropylen-Kautschuk. Des Weiteren sind geeignet: thermoplastische Polyolefine, thermoplastische Vulkanisate wie z.B. auf EPDM-Basis, thermoplastische Elastomere auf Styrol-Basis wie z.B. Styrol-Ethylen-Butadien-Styrol sowie auf Copolyamid- oder Copolyester Basis.

In einer bevorzugten Ausführungsform weisen die Schichten a) und c) unabhängig voneinander eine Dicke von 0,2 bis 2 mm auf.

Weiterhin bevorzugt werden als Schicht a) und/oder c) gereckte Platten aus thermoplastischem Kunststoff eingesetzt. Dazu werden die Platten entlang einer oder mehrerer Hauptausdehungsrichtungen des Kunststoff-Verbundbauteils gereckt (biaxiales Recken unterhalb der Kristallitschmelzetemperatur). Dies bewirkt, dass bei Temperaturerhöhung das Relaxationsvermögen der Kunststoffe der thermischen Ausdehnung entgegenwirkt. Das Relaxationsvermögen der Kunststoffe resultiert dabei aus der Entspannung der orientierten Molekülketten.

Ein Beispiel für mögliche elastomere Kunststoffe der Schicht b) ist thermoplastisches Polyurethan. Daneben sind auch chemisch vernetzte Elastomere einsetzbar, z.B.
Styrolbutadien-Kautschuk, Butyl-Kautschuk, Acrylnitril-Kautschuk, Ethylenvinylacetat-Kautschuk, Ethylenpropylen-Kautschuk.

Das Elastomer kann verstärkt, z.B. faser- oder gewebeverstärkt, und/oder gefüllt sein. Durch die Verstärkung und/oder Füllstoffe wird die Wärmeausdehnung und die Splitterneigung von spröderen thermoplastischen Deckschichten, welche ggf. einen höheren Anteil an Füllstoffen enthalten, weiter reduziert. Eine Gewebeverstärkung der elastomeren Schicht b) erhöht deutlich das E-Modul und die Wärmeformbeständigkeit im Vergleich zu konventionellen Bauteilen aus Thermoplast. Kunststoff-Verbundbauteile mit einer gewebeverstärkten elastomeren Schicht b) können trotz der Gewebeverstärkung auch als horizontale Bauteile, z.B. für Motorhauben, Kofferraumdeckel, Autodächer, eingesetzt werden. Die Einbettung der Gewebeverstärkung in die elastomere mittlere Schicht anstelle der thermoplastischen äußeren Schichten verhindert, dass sich die Gewebestruktur auf der Oberfläche des Verbundbauteils abzeichnet. Somit können die erfindungsgemäßen Kunststoff-Verbundbauteile auch die Anforderungen an Class A-Oberflächen erfüllen.

Die elastomere Schicht b) kann auch eine Klebefolie bzw. Klebeplatte sein. In diesem Fall stellt die elastomere Schicht b) eine Klebeverbindung zu den thermoplastischen Schichten a) und b) her. Dabei wird die Klebefolie bzw. Klebeplatte b) zwischen zwei thermoplastischen Schichten a) und b) angeordnet und unter Temperatureinwirkung mit diesen zu einem festen Verbund verpresst.

In einer bevorzugten Ausführungsform weist die Schicht b) eine Dicke von 0,1 bis 1 mm auf.

Die Platten oder Folien aus thermoplastischem bzw. elastomerem Kunststoff für die Schichten a) und c) bzw. b) lassen sich nach bekannten Verfahren, z.B. durch Extrusion, herstellen.

Die Herstellung und die Umformung des schichtenförmig aufgebauten Kunststoffverbundes erfolgt nach an sich bekannten Verfahren. Die Herstellung des erfindungsgemäßen Kunststoff-Verbundbauteils erfolgt beispielsweise dadurch, dass zwischen zwei Platten aus thermoplastischem Kunststoff als Schicht a) und c) eine Klebefolie oder Klebeplatte aus einem Elastomer als Schicht b) angeordnet wird und die Schichten unter Temperatureinwirkung zu einem festen Verbund verpresst werden. Eine andere Fertigungsvariante besteht darin, die Schichten a), b) und c) direkt nach der Extrusion noch im plastischen Zustand mit Hilfe einer Plattenkalibrierung und/oder eines Walzwerkes zu einem festen Verbund, d.h. durch Verpressen und/oder Kalandrieren, zu verbinden.

Class A-Oberflächen können beispielsweise mittels Spritzgießen, Film Insert Molding, Polieren, Lackieren erzeugt werden.

Die Umformung des Kunststoff-Verbunds zur Fertigung von Bauteilen kann beispielsweise durch Thermoformen oder Kaltverformen mittels Hochdruckverfahren erfolgen.

Neben dem Einsatz des erfindungsgemäßen Kunststoff-Verbundbauteils als horizontal angeordnetes Beplankungsteil kann das Verbundbauteil auch als vertikal angeordnetes Beplankungsteil verwendet werden. Beispiele hierfür sind Autotüren und Seitenverkleidungen, bei denen es besonders auf eine geringe Wärmeausdehnung ankommt.

Somit eignet sich das Verbundbauteil sowohl als vertikales als auch horizontales Beplankungsteil für Kfz-Karosserien mit geringer Wärmeausdehnung, guter Kaltschlagzähigkeit und Class A-Oberfläche. Aus dem Verbundbauteil können metallfreie steife und hoch feste Beplankungsteile hergestellt werden. Als hoch feste Beplankungsteile werden solche angesehen, die im Vergleich zu konventionell aus Kunststoffteilen aufgebauten Beplankungsteilen eine höhere Festigkeit, Steifigkeit und Schlagfestigkeit aufweisen. Ein Vorteil des erfmdungsgemäßen Verbundbauteils liegt in der geringen Wärmeausdehnung. Unter einer geringen Wärmeausdehnung im Sinne der vorliegenden Erfindung wird der Bereich von 20 bis 40·10⁻⁶ K⁻¹ angesehen. Die Wärmeausdehnung ist somit gegenüber der praxisüblichen reinen Thermoplastbeplankung um 12,5 bis 200 % reduziert. Gleichzeitig weist das Verbundbauteil ein zäh-elastisches Verformungsverhalten bei tiefen Temperaturen auf, wobei unter tiefen Temperaturen im Sinne der vorliegenden Erfindung der Bereich von -10 bis -30°C angesehen wird. Das Verbundbauteil zeigt insbesondere eine verbesserte Kaltschlagzähigkeit mit einem zäh/spröd-Übergang, welcher um 10 bis 20°C nach unten verschoben ist.

Ein weiterer Gegenstand der Erfindung ist die Verwendung des Kunststoff-Verbundbauteils als Karosseriebeplankung.

### Beispiele

Tabelle 1 zeigt einige Beispiele eines erfindungsgemäßen Kunststoff-Verbundbauteils und dessen lineare Wärmeausdehnung, Schlagzähigkeit bei -20 bis -30°C. Weiterhin gibt die Tabelle an, ob die äußeren thermoplastischen Schichten a) und c) eine Class A-Oberfläche aufweisen oder nicht.

**Tabelle 1**

| **Schicht a)** | **Schicht b)** | **Schicht c)** | **Lineare Wärmeausdehnung [10**^{**-6**} **K**^{**-1**}**]** | **Schlagzähigkeit bei -20/-30 °C** | **Class A- Oberfläche** |
|---|---|---|---|---|---|
| PC gereckt | Ethylenvinylacetat (EVA) | PC gereckt | 30-40 | zäh/spröde | ja |
| PC | EVA mit Gewebeverstärkung | PC | 40 | zäh/zäh-spröde | ja |
| PC | TPU mit Gewebeverstärkung | PC | 40 | zäh/zäh | ja |
| PC/PET20M | EVA mit unidirektionaler Faserverstärkung | PC/PET20M | 40 | spröde/spröde | ja |

## Patentansprüche

1. Kunststoff-Verbundbauteil, **gekennzeichnet durch** folgenden Schichtenaufbau
a) wenigstens eine Schicht aus wenigstens einem thermoplastischen Kunststoff
b) wenigstens eine Schicht aus wenigstens einem elastomeren Kunststoff
c) wenigstens eine Schicht aus wenigstens einem thermoplastischen Kunststoff,
wobei die Schicht b) zwischen der Schicht a) und der Schicht c) angeordnet ist.

2. Kunststoff-Verbundbauteil nach Anspruch 1, **dadurch gekennzeichnet, dass** die Schicht a) und Schicht c) unabhängig voneinander eine Dicke von 0,2 bis 2 mm aufweist.

3. Kunststoff-Verbundbauteil nach einem der Ansprüche 1 oder 2, **dadurch gekennzeichnet, dass** die Schicht b) eine Dicke von 0,1 bis 1 mm aufweist.

4. Kunststoff-Verbundbauteil nach einem der Ansprüche 1 bis 3, **dadurch gekennzeichnet, dass** die Schicht a) und Schicht c) unabhängig voneinander aus, gegebenenfalls faserverstärktem und/oder mineralgefülltem und/oder elastomermodifiziertem Polyethylenterephthalat, Polybutylenterephthalat, Polyethylenterephthalat/Polycarbonat, Polyethylenterephthalat/Acrylnitril-Styrol-Acrylat, Polybutylenterephthalat/Polycarbonat, Polybutylenterephthalat/ Acrylnitril-Styrol-Acrylat, Polycarbonat/Acrylnitril-Styrol-Acrylat, Polycarbonat/Acrylnitril-Butadien-Styrol, Acrylnitril-Butadien-Styrol, Polyamid oder Polypropylen besteht.

5. Kunststoff-Verbundbauteil nach einem der Ansprüche 1 bis 4, **dadurch gekennzeichnet, dass** die Schicht b) aus, gegebenenfalls gefülltem und/oder verstärktem, thermoplastischem Polyurethan, Styrolbutadien-Kautschuk, Butyl-Kautschuk, Acrylnitril-Kautschuk, Ethylenvinylacetat-Kautschuk oder Ethylenpropylen-Kautschuk besteht.

6. Kunststoff-Verbundbauteil nach einem der Ansprüche 1 bis 5, **dadurch gekennzeichnet, dass** die Schicht a) und/oder Schicht c) aus einer gereckten Platte aus thermoplastischem Kunststoff besteht:

7. Verwendung des Kunststoff-Verbundbauteils nach einem der Ansprüche 1 bis 6 als Karosseriebeplankung.
